# FASCICULE DE BREVET EUROPEEN

(11) **EP 1 034 522 B1**
(45) Date de publication et mention de la délivrance du brevet: **28.01.2004**
(21) Numéro de dépôt: 98955272.4
(22) Date de dépôt: 20.11.1998
(51) Int. Cl.: G08G 1/04

(54) **DISPOSITIF DE DETECTION PAR CELLULES PHOTOELECTRIQUES**
SENSORANORDNUNG MIT FOTOZELLEN
DEVICE FOR DETECTION BY PHOTOELECTRIC CELLS

(30) Priorité: 24.11.1997 BE 9700941; 06.07.1998 BE 9800509
(43) Date de publication de la demande: 13.09.2000
(73) Titulaire: Cuvelier, Michel, 4000 Liège (BE)
(72) Inventeur: Cuvelier, Michel, 4000 Liège (BE)
(74) Mandataire: Quintelier, Claude
(86) Numéro de dépôt international: PCT/BE1998/000179
(87) Numéro de publication internationale: WO 1999/027511

(56) Documents cités:
- EP-A- 0 484 270
- EP-A- 0 635 729
- DE-C- 3 821 892
- FR-A- 2 443 071
- FR-A- 2 523 341
- US-A- 5 172 003
- US-A- 5 689 328

## Description

La présente invention se situe dans le domaine de la détection par cellules photoélectriques pour des applications où il est nécessaire, par exemple, d'observer l'état d'une surface en mouvement relatif par rapport à la cellule photoélectrique grâce à la réflexion des ondes émises sur cette surface par la cellule photoélectrique et perçues par son récepteur.

Les applications faisant appel à ce type de cellules photoélectriques sont cependant limitées à des conditions de travail dans un milieu protégé dans lequel les paramètres tels que les conditions d'ambiance, la stabilité de la surface visée sont bien maîtrisés.

On connaît déjà un dispositif de détection tel qu'indiqué au préambule de la revendication 1 (v. par exemple EP-A-0484270).

Pour résoudre les problèmes indiqués ci-dessus on a prévu suivant l'invention un dispositif tel qu'indiqué dans le préambule de la revendication 1, ce dispositif étant caractérisé en ce qu'il comporte en plus une lunette de visée disposée dans le prolongement de la lunette optique, la lunette de visée assurant la protection de ladite au moins une fenêtre et/ou lentille et/ou système optique de protection et d'étanchéité contre des projections extérieures et définissant une plage utile de travail, une direction de visée et une sensibilité de travail de la cellule photoélectrique et en ce que ladite au moins une fenêtre et/ou lentille et/ou système optique de protection et d'étanchéité est monté(e) à une distance prédéterminée par rapport audit au moins un émetteur et audit au moins un récepteur de la cellule photoélectrique pour optimaliser le passage des ondes émises et réfléchies à travers ladite au moins une fenêtre et/ou lentille et/ou système optique de protection et d'étanchéité.

D'autres formes de réalisation du dispositif suivant l'invention sont indiquées dans les revendications secondaires.

L'utilisation d'un dispositif suivant l'invention est également comprise dans la présente invention et est indiquée en particulier dans les revendications annexées.

Des particularités et avantages de l'invention seront décrits dans des modes de réalisation particulière, référence étant faite aux dessins annexés dans lesquels :
la figure 1 représente la cellule photoélectrique dans son enceinte de protection avec en prolongement la lunette optique et la lunette de visée,
la figure 2 représente la cellule photo-électrique placée dans une double enceinte de protection,
la figure 3 représente une cellule photoélectrique avec une lunette optique ayant deux fenêtres de protection,
la figure 4 représente deux cellules photoélectriques juxtaposées dans une même enceinte de protection prolongée par une lunette photoélectrique. On peut y placer une paroi transversale séparant l'enceinte de protection A de la lunette optique B.

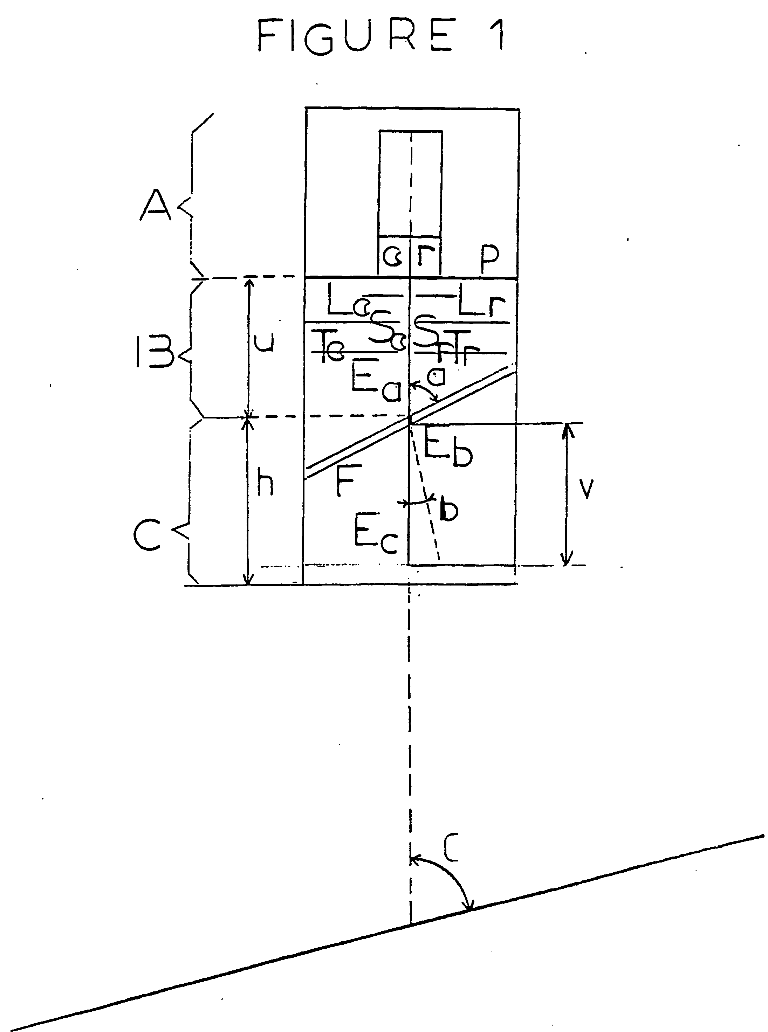

Cette paroi sera de référence opaque aux rayonnements de la cellule photoélectrique en ne laissant apparaître que la sortie émetteur et récepteur de celle-ci (figure 1A indice P). Une cloison mince Ea, opaque aux ondes de la cellule photoélectrique empêche la réflexion des ondes émises vers le récepteur r pendant le parcours de celles-ci dans la lunette optique (Figure 1 B indice Ea). Cette cloison Ea peut venir en prolongement d'un écran interne séparant au sein même de la cellule photoélectrique, l'émetteur e du récepteur r.

Cette cloison Ea est parallèle à l'axe optique de l'émetteur e et du récepteur r de la cellule photoélectrique et rejoint une fenêtre F plane transparente aux rayonnements de la cellule photoélectrique (Figure 1 B indice F).

Cette fenêtre F assure l'étanchéité de la lunette optique B et de l'enceinte de protection A; elle peut également servir de filtre pour le rayonnement de la cellule photoélectrique tant au niveau de l'émetteur e qu'au niveau du récepteur r.

Cette fenêtre F est placée dans on plan de préférence oblique par rapport à l'axe optique de l'émetteur e et du récepteur r de la cellule photoélectrique caractérisé par l'angle a (Figure 1 B indice a). Il est également souhaitable que ce plan incliné tienne compte de la position de l'émetteur e et du récepteur r en présentant une génératrice du plan incliné de telle manière qu'elle soit parallèle à la droite joignant les centres optiques de l'émetteur e et du récepteur r. Dans les figures 1, 2 et 4, il faut donc faire pivoter de 90°, autour de l'axe optique de l'émetteur e et du récepteur r le plan de la fenêtre F pour être conforme à la configuration décrite ci-dessus.

Les figures 1, 2 et 4 montrent plus aisément le positionnement des cloisons Ea, Eb, Ec par rapport à l'émetteur e et au récepteur r de la cellule photoélectrique.

Toutefois il est possible de garder le positionnement de la fenêtre F comme indiqué aux figures 1, 2 et 4 en présence des cloisons Ea et Eb.

La distance u (Figure 1 B indice u) qui sépare cette fenêtre F de la cellule photoélectrique elle-même est un paramètre de nature à influencer le comportement de la cellule photoélectique. Il existe donc une position optimum à respecter en fonction des caractéristiques de la cellule photoélectrique.

On peut prévoir d'y déposer sur une ou sur les deux faces de cette fenêtre F un revêtement anti-buée, anti-réverbération, anti-adhérent et filtrant.

Il est également possible d'ajouter des filtres Se dans le champ optique de l'émetteur e ainsi que des filtres Sr dans le champ optique du récepteur r (Figure 1 B indices Se et Sr). Ces filtres Se, Sr doivent aussi être séparés par la cloison Ea.

La cloison Eb (Figure 1 B indice Eb) traversera de préférence la fenêtre F et peut se prolonger au-delà de cette fenêtre F pour créer un compartiment distinct pour les ondes émises et les ondes réfléchies dans cette zone. Toutefois on peut réaliser la traversée de la cloison Eb, au moyen d'un dépôt opaque aux rayons de la cellule photoélectrique, inséré dans l'épaisseur de la fenêtre F à l'endroit voulu.

La fenêtre F peut également être placée dans un plan perpendiculaire à l'axe optique de l'émetteur e et du récepteur r à condition que l'on utilise au moins la cloison de séparation Ea.

Dans chacun des deux compartiments ainsi constitués entre la cellule photoélectrique et la fenêtre F ou dans l'un d'entre eux on peut éventuellement y loger une lentille ou un système optique Le, Lr pour adapter le fonctionnement de la cellule photoélectrique à une distance de travail fonction des conditions d'utilisation (Figure 1 B).

L'étanchéité et la protection de l'enceinte de protection A et de la lunette optique B est assurée par la fenêtre F.

Les lentilles ou le système optique Le, Lr peuvent également assurer la même protection et la même étanchéité à condition de faire usage d'au moins une cloison Ea.

La fenêtre F peut éventuellement se ternir et recevoir des projections diverses sans que les ondes réfléchies sur les parois de la fenêtre F ne viennent perturber le fonctionnement du récepteur r de la cellule photoélectrique. En effet même sans cloison Ea, Eb les ondes émises qui pourraient se réfléchir au contact de cette fenêtre F en raison d'un dépôt de corps étrangers sur sa surface (condensation, projection d'eau, de boue, etc...) suivront une direction oblique les mettant hors de portée du récepteur r de la cellule photoélectrique pour être absorbées ensuite par les parois de la lunette optique B. Les cloisons Ea, Eb renforcent encore la séparation du chemin optique de l'émetteur e et du récepteur r jusqu'à la sortie de la fenêtre F.

Lorsque la protection et l'étanchéité sont assurées par une lentille ou un système optique Le, Lr, les lentilles Le, Lr doivent être placées dans un plan perpendiculaire aux axes optiques de l'émetteur e et du récepteur r nécessitant la présence de la cloison Ea et éventuellement de la cloison Eb.

Dans le cas du montage de la cellule photoélectrique sur un véhicule destiné au transport chimique, il est nécessaire de prévoir une double enceinte de protection de la cellule photoélectrique si le corps de la cellule photoélectrique n'est pas lui-même étanche à l'origine.

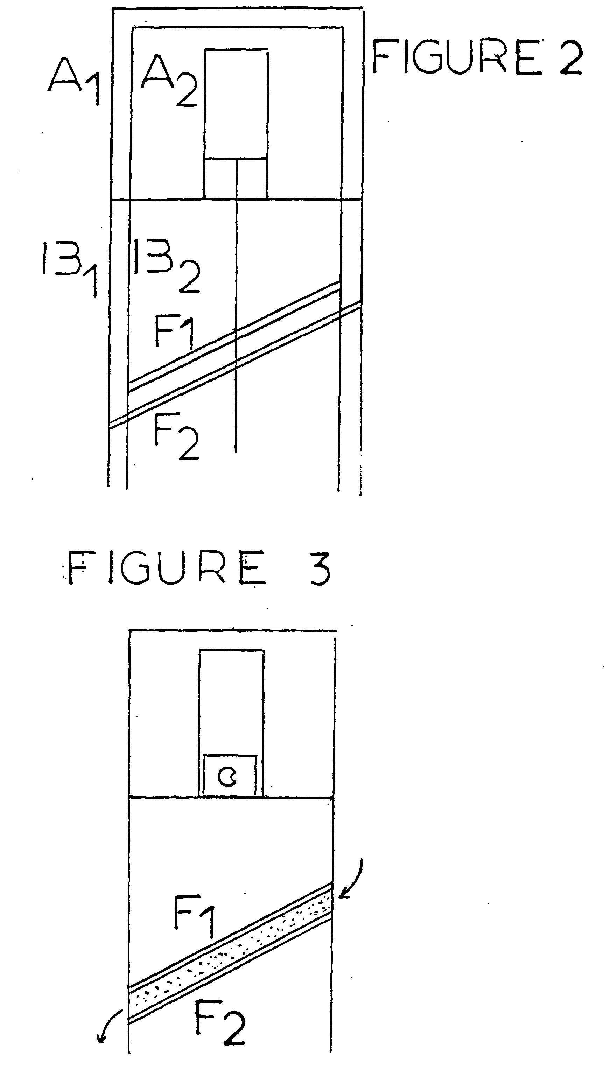

Comme on le voit à la figure 2, l'enceinte A et la lunette optique B ont une double parois A1, A2 et B1, B2 et on peut faire appel à deux fenêtres F1 et F2 parallèlement disposées, traversées par la cloison Eb; l'une des fenêtres F1 formant un joint étanche avec le compartiment B2 qui est placé à l'intérieur et l'autre fenêtre F2 formant un joint étanche avec le compartiment B1 placé à l'extérieur.

Il est possible d'introduire aussi un diaphragme Te dans le chemin optique de l'émetteur e et/ou un diaphragme Tr dans le chemin optique du récepteur r de la cellule photoélectrique pour un réglage du niveau de sensibilité de celle-ci; ce ou ces diaphragmes étant séparés par la cloison Ea (Figure 1 B indices Te, Tr).

Une lunette de visée C (Figure 1 C) prolonge la lunette optique B de manière à protéger la fenêtre F ou les lentilles ou le système optique Le, Lr contre des projections éventuelles. Sa longueur et sa section déterminent également la section de surface utile contrôlée par la cellule photoélectrique. La paroi intérieure de la lunette de visée C est de préférence anti-réfléchissante pour les ondes de la cellule photoélectrique. Toutefois si on place une cloison Ec (Figure 1 C indice Ec) dans la lunette de visée C en prolongement de la cloison Eb on peut former deux compartiments distincts, un pour les ondes émises, l'autre pour les ondes réfléchies. En modifiant l'angle b de cette cloison Ec par rapport à l'axe optique de l'émetteur e et du récepteur r de la cellule photoélectrique on change la section de passage des ondes émises et réfléchies ce qui donne un moyen de réglage aisé de la sensibilité de la cellule photoélectrique (Figure 1 C indice b).

La hauteur v de la cloison Ec détermine également une section de passage pour les ondes de la cellule photoélectrique et peut être considérée par conséquent comme un élément de réglage supplémentaire de la sensibilité de la cellule photoélectrique.

Grâce à la cloison Ec, il est donc possible de diaphragmer la section de passage des ondes émises et réfléchies à n'importe quel niveau de la lunette de visée C en fonction de la hauteur v de la cloison Ec (figure 1C indice c).

La hauteur h (Figure 1 C indice h) peut également servir à déterminer la section utile de la surface visée par la cellule photoéléctrique tout en opérant un réglage du seuil de la sensibilité de la cellule photoélectrique.

En inclinant judicieusement la lunette de visée C et son axe optique par rapport à la surface d'observation, il est possible d'éliminerles ondes se réfléchissant directement sur cette surface (effet de miroir) pour les mettre hors de portée du récepteur r de la cellule photoélectrique qui ne percevra que les ondes à réflexion diffuse. L'angle d'inclinaison c (figure 1, indice c) dépend de la distance séparant la lunette de visée C de la surface d'observation, de la hauteur h (Figure 1 C indice h) et de la section transversale de la lunette de visée C. Cet angle c est influencé également par la hauteur v de la cloison Ec.

L'angle d'inclinaison c (figure 1, indice c) doit tenir compte des caractéristiques de la cellule photoélectrique sensible à la réflexion diffuse et de la quantité d'ondes à réflexion directe qu'il est possible de tolérer au niveau du récepteur r suivant les conditions d'ambiance pouvant modifier le pouvoir réfléchissant de la surface visée (pluie).

Si on veut accroître les performances de la cellule photoélectrique à la réflexion diffuse on peut augmenter la hauteur h de la lunette de visée C en ayant soin de choisir une paroi intérieure de cette lunette de visée C réfléchissant bien les ondes de la cellule photoélectrique.

Un pivotement sur elles-mêmes des cloisons Ea, Eb, Ec est également un moyen de réglage de la sensibilité de la cellule photoélectrique; cette sensibilité étant maximum lorque le plan des cloisons Ea, Eb, Ec est perpendiculaire au plan déterminé par l'axe optique de l'émetteur e et du récepteur r de la cellule photo-électrique.

En cas de placement de la cellule photoélectrique dans une ambiance de chaleur, il est possible de refroidir l'enceinte de protection par un fluide refroidisseur et de faire circuler un fluide transparent aux rayonnements de la cellule photoélectrique entre deux fenêtres parallèles F1, F2 séparées par une cloison Eb (Figure 3 indices F1, F2). La fenêtre extérieure F2 peut être éventuellement en quartz pour pouvoir supporter un niveau élevé de température.

Dans beaucoup d'applications, il est possible d'assurer un bon fonctionnement de la cellule photoélectrique au moyen d'une seule fenêtre oblique F formant joint d'étanchéité avec le compartiment B sans utiliser aucune cloison Ea, Eb, Ec ni des lentilles ou système optique Le, Lr.

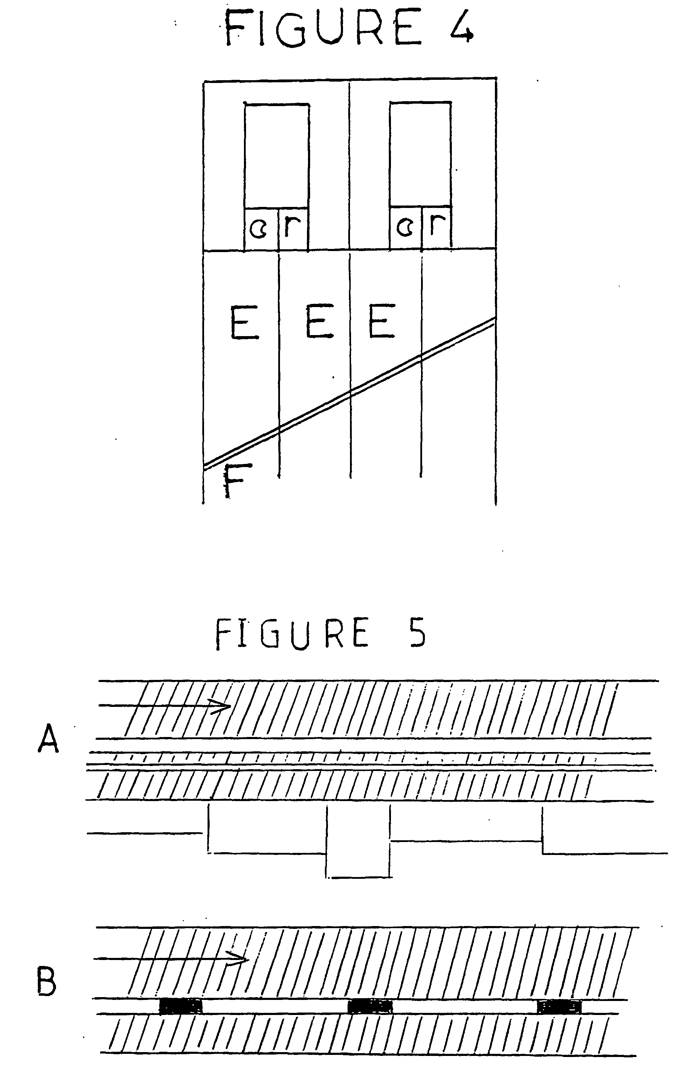

On peut également placer plusieurs cellules photoélectriques dans une même enceinte de protection en séparant les émetteurs e des récepteurs r par des cloisons E associées à une fenêtre F (Figure 4 indices E, F).

L'enceinte de protection A, la lunette optiqueB et la lunette de visée C sont également utiles en milieu protégé car elles possèdent un dispositif de réglage de sensibilité par diaphragme et un dispositif optique permettant de tenir compte de la distance de séparation entre la cellule photoélectrique et la surface utile réfléchissante. Elles sont gages d'un bon fonctionnement en permanence de la cellule photoélectrique même si une perturbation passagère du milieu ambiant peut survenir.

Le dispositif proposé dans l'invention permet d'accroître considérablement le champ d'application de ces cellules photoélectriques.

En effet, grâce à l'enceinte de protection, à la lunette optique et à la lunette de visée, il devient possible de placer la cellule photoélectrique dans un milieu extérieur instable où les conditions d'ambiance telles que : humidité, température, éclairage, propreté peuvent fluctuer sans cesse.

Grâce à la lunette optique particulièrement, il devient également possible de séparer les ondes à réflexion directe des ondes à réflexion diffuse qui seront perçues par le récepteur de la cellule photoélectrique en provenance d'une surface visée elle-même soumise aux conditions variables d'une ambiance instable.

C'est ainsi par exemple que ce type de cellule photoélectique placée dans son enceinte de protection munie de la lunette optique et de la lunette de visée peut être embarqué sur un véhicule pour observer la surface de roulement ou son voisinage immédiat (bande de sécurité, approche d'un autre véhicule...), ou placée sur une canne blanche pour aider un non-voyant dans ses déplacements ou sur du matériel ferrovière pour capter les signaux de signalisation à grande vitesse, etc...

### Exemples d'application

### Exemple 1

### Installation du dispositif de détection par cellules photoélectriques sur véhicule routier

Comme il est déjà décrit dans WO 97/17686 il est possible d'utiliser un ou plusieurs dispositifs de détection par cellules photoélectriques ainsi protégées sur des véhicules routiers pour distinguer les marquages au sol de diverses natures, les bordures et accotements des routes ou la présence d'autres véhicules ou de barrières de sécurité. La lecture correcte des signaux perçus par les cellules photoélectriques est enregistrée à bord du véhicule et transite dans une unité électronique pour transmettre au conducteur ou au véhicule les consignes utiles ayant été enregistrées.

### Exemple 2

### Installation du dispositif de détection par cellules photoélectriques sur du matériel ferrovière

En installant un ou plusieurs dispositifs de détection par cellules photo électriques sur du matériel ferrovière, il est possible de capter des messages codés à grande vitesse au moyen de panneaux présentant des segments réfléchissant alternant avec des segments absorbant suivant un système codé. Les messages perçus par les cellules au passage du train seront transmis grâce à une unité électronique au conducteur sous forme de messages sonores et lumineux et également à la commande du train lui même pour déclencher des fonctions d'automatisme correspondantes. On peut placer par exemple ces panneaux verticalement en bordure des rails à une certaine hauteur où il est possible de les abriter sommairement.

On peut également prévoir des panneaux modulables à distance de manière à transmettre des messages différents à tout instant.

Pour obtenir cette modulation il suffit par exemple de remplacer par une commande à distance éventuelle l'un ou l'autre des segments initialement réfléchissant par des segments absorbant.

On peut également combiner deux ou plusieurs panneaux posés à des niveaux différents qui seront vus par deux ou plusieurs dispositifs de détection par cellules photoélectriques placés en regard de ceux-ci pendant la marche du convoi ferrovière. Le nombre de messages ainsi transmissibles au conducteur ou à la machine est quasi illimité tout en nécessitant moins de segments pour établir les informations codées.

### Exemple 3

### Installation du dispositif de détection par des cellules photoélectriques sur des moyens de transports divers ou des engins élévateurs (chantiers, ports, usines, etc...)

Il est possible d'installer sur du matériel de transport et du matériel élévateur destinés aux usines, aux ports, aux chantiers un ou plusieurs dispositifs de détection par des cellules photoélectriques de manière à indiquer aux conducteurs des itinéraires au sol tracés en marquage de couleur réfléchissante. Il est possible également de transmettre au conducteur ou aux engins eux mêmes de nombreux messages supplémentaires en utilisant un ou plusieurs panneaux de segments appropriés combinés à un ou plusieurs dispositifs de détection par cellules photoélectriques fixés sur ces engins (niveau d'élévation, etc...).

### Exemple 4

### Installation du dispositif de détection par cellules photoélectriques en regard d'un axe de rotation ou d'une roue pour en mesurer la vitesse rotative

En effet il suffit de disposer sur la roue ou sur l'axe de rotation un ou plusieurs segments réflechissant alternant avec un ou plusieurs segments absorbant qui pourront être comptés par le dispositif de détection par cellules photoélectriques placé en regard de ces segments.

### Exemple 5

### Installation du dispositif de détection par cellules photoélectriques sur une canne blanche pour non-voyant

Il est possible de monter un ou plusieurs dispositifs de détection par cellules photoélectriques sur une canne blanche pour aider un non-voyant dans ses déplacements.

Ces cellules photoélectriques seront donc sensibles à toute peinture ou matériau réfléchissant disposés sur le sol désignant une trajectroire à suivre au moyen de la canne équipée.

Un système codé placé sur le sol ou à d'autres endroits peut déterminer aux lieux névralgiques (carrefours, entrées de gare, etc...) toutes les informations dont il pourrait avoir besoin au cours de son déplacement.

Une trajectoire définie par des traits de couleur claire peut être rendue facilement identifiable en doublant les lignes ayant éventuellement des largeurs différentes (figure 5 indice A) ou en les hachant par exemple au moyen de zones absorbantes régulièrement espacées (figure 5 indice B).

Les messages perçus par les cellules peuvent être traduits grâce à une unité électronique en messages sonores (buzzer, messages parlés, etc...) ou digitaux (vibrations, lecture en Braille, etc...).

## Revendications

1. Dispositif de détection par cellules photoélectriques comportant :
- au moins une enceinte de protection (A) entourant au moins un émetteur (e) et au moins un récepteur (r) d'une cellule photoélectrique, et
- au moins une lunette optique (B) munie d'au moins une fenêtre (F) de protection et d'étanchéité, et/ou d'au moins une lentille de protection et d'étanchéité et/ou d'au moins un système optique (Le, Lr) de protection et d'étanchéité, laquelle au moins une fenêtre et/ou lentille et/ou système optique est transparent(e) aux ondes émises et réfléchies de la cellule photoélectrique,
**caractérisé en ce qu'**il comporte en outre une lunette de visée (C) disposée dans le prolongement de la lunette optique (B), la lunette de visée (C)assurant la protection de ladite au moins une fenêtre (F) et/ou lentille et/ou système optique de protection et d'étanchéité contre des projections extérieures et définissant une plage utile de travail, une direction de visée et une sensibilité de travail de la cellule photoélectrique et **en ce que** ladite au moins une fenêtre (F) et/ou lentille et/ou système optique de protection et d'étanchéité est monté(e) à une distance (u) prédéterminée par rapport audit au moins un émetteur (e) et audit au moins un récepteur (r) de la cellule photoélectrique pour optimaliser le passage des ondes émises et réfléchies à travers ladite au moins une fenêtre et/ou lentille et/ou système de protection et d'étanchéité.

2. Dispositif de détection par cellules photoélectriques selon la revendication 1, **caractérisé en ce que** ladite fenêtre (F) est disposée obliquement.

3. Dispositif de détection par cellules photoélectriques selon l'une quelconque des revendications précédentes, **caractérisé en ce qu'**il comporte une cloison (Ea) dans la lunette optique (B) pour séparer les rayons émis des rayons réfléchis lorsque le récepteur (r) et l'émetteur (e) de la cellule photoélectrique sont juxtaposés.

4. Dispositif de détection par cellules photoélectriques selon l'une des revendications précédentes, **caractérisé en ce qu'**il comporte des moyens de séparation (Eb) dans la fenêtre (F), les moyens de séparation (Eb) dans la fenêtre (F) étant disposés en prolongement des moyens de séparation (Ea) dans la lunette optique (B).

5. Dispositif de détection par cellules photoélectriques selon l'une quelconque des revendications précédentes, **caractérisé en ce qu'**il comporte une cloison (Ec) dans la lunette de visée (C).

6. Dispositif de détection par cellules photoélectriques selon l'une quelconque des revendications précédentes, **caractérisé en ce que** l'inclinaison (c) de l'axe optique de la lunette de visée (C) par rapport à la surface à observer permet le contrôle des rayons à réflexion directe en direction du récepteur (r) tout en gardant une sensibilité à la réflexion diffuse.

7. Dispositif de détection par cellules photoélectriques selon l'une quelconque des revendications précédentes, **caractérisé en ce qu'**il comporte un système optique (Le) pour l'émetteur (e) et/ou un système optique Lr) pour le récepteur (r), le système optique (Le) pour l'émetteur (e) étant placé dans le champ de rayonnement de l'émetteur (e) pour son ajustement sur la surface utile visée, le système optique (Lr) étant disposé dans le champ des ondes réfléchies perçues par le récepteur (r) pour tenir compte de la position de la cellule photoélectrique par rapport à la surface utile à observer.

8. Dispositif de détection par cellules photoélectriques selon l'une quelconque des revendications précédentes, **caractérisé en ce qu'**il comporte un diaphragme (Te) pour l'émetteur (e) et/ou un diaphragme (Tr) pour le récepteur (r).

9. Dispositif de détection par cellules photoélectriques selon l'une quelconque des revendications précédentes, **caractérisé en ce qu'**il comporte un filtre (Se) pour l'émetteur (e) et/ou un filtre (Sr) pour le récepteur (r).

10. Dispositif de détection par cellules photoélectriques selon l'une quelconque des revendications précédentes, **caractérisé en ce que** la position de la fenêtre (F) par rapport à l'axe optique de l'émetteur (e) et du récepteur (r) de la cellule photoélectrique est définie par un angle (a) et une distance de séparation (u) fonction des caractéristiques de celle-ci.

11. Dispositif de détection par cellules photoélectriques selon l'une quelconque des revendications précédentes, **caractérisé en ce que** la fenêtre (F) a subi un traitement filtrant, anti-buée, anti-adhérent, anti-réfléchissant sur une face ou sur les deux faces, et/ou un traitement filtrant dans l'épaisseur même de la fenêtre (F).

12. Dispositif de détection par cellules photoélectriques selon l'une quelconque des revendications précédentes, **caractérisé en ce qu'**il comporte deux fenêtres (F1, F2) parallèles pour réaliser une protection à double parois.

13. Dispositif de détection par cellules photoélectriques selon la revendication 12, **caractérisé en ce que** les deux fenêtres (F1, F2) sont séparées par la cloison (Eb) entre lesquelles circule un liquide ou un gaz refroidisseur.

14. Dispositif de détection par cellules photoélectriques selon l'une quelconque des revendications précédentes, **caractérisé en ce que** la lunette de visée (C) a une paroi intérieure de nature réfléchissante pour le rayonnement des ondes de la cellule photoélectrique dans le but d'accroître les performances de celle-ci à la réflexion diffuse.

15. Usage d'au moins un dispositif selon l'une quelconque des revendications précédentes monté sur du matériel ferroviaire en vue de transmettre au conducteur ou à la machine des informations pendant le déplacement du convoi à partir de panneaux codés placés en regard du matériel roulant.

16. Usage d'au moins un dispositif selon l'une quelconque des revendications précédentes permettant la lecture simultanée de deux ou plusieurs panneaux codés étagés en association avec deux ou plusieurs dispositifs de détection par cellules photoélectriques étant placés sur du matériel susceptible de se déplacer pour enregistrer et y transmettre les informations utiles au cours du déplacement de celui-ci.

17. Usage d'au moins un dispositif selon l'une quelconque des revendications 1 à 14, les dispositifs de détection par cellules photoélectriques étant placés sur du matériel de transport en usines, ports, chantiers pour identifier un itinéraire et indiquer des endroits d'arrêt et transmettre des messages codés.

18. Usage d'au moins un dispositif selon l'une quelconque des revendications 1 à 14, monté sur une canne pour piétons en vue de déterminer une trajectoire ou donner des informations en clair ou en signes sensitifs (vibrations, braille) tout au long du parcours emprunté.

19. Usage d'au moins un dispositif selon l'une quelconque des revendications 1 à 14, monté sur un engin élévateur pour indiquer les différents niveaux d'élévation avec message éventuel et la position d'arrêt précis en cas d'engin mobile.

20. Usage d'au moins un dispositif selon l'une quelconque des revendications 1 à 14, placé en regard d'un axe de rotation, d'une roue pour mesurer la vitesse de rotation grâce au placement sur cet axe ou sur cette roue d'un ou plusieurs segments réfléchissant alternant avec un ou plusieurs segments absorbants.

21. Usage selon l'une quelconque des revendications 15 et 20 dans lequel le dispositif est monté en regard du matériel ferroviaire en vue de transmettre au sol des informations pendant le déplacement du convoi à partir de panneaux codés placés sur le matériel roulant.

22. Usage selon l'une quelconque des revendications 16 et 20, permettant la lecture simultanée de deux ou plusieurs panneaux codés étagés en association avec deux ou plusieurs dispositifs de détection par cellules photoélectriques, celles-ci étant fixes par rapport aux panneaux codés disposés sur du matériel roulant.

23. Usage selon l'une quelconque des revendications 17 et 20, les panneaux étant placés sur du matériel de transport dans les usines, les ports, les chantiers, les dispositifs de détection par cellules photoélectriques étant disposés sur des postes fixes.

24. Dispositif de détection par cellules photoélectriques **caractérisé en ce qu'**il comporte au moins une enceinte de protection (A) entourant au moins un émetteur (e) et au moins une enceinte de protection (A) entourant au moins un récepteur (r) d'au moins une cellule photoélectriquë,
- au moins une lunette optique (B) munie d'au moins une fenêtre (F, F1, F2) et/ou d'au moins une lentille de protection et d'étanchéité et/ou d'au moins un système optique (Le) et/ou d'un système optique (Lr), une lunette optique (B) étant disposée dans le prolongement de l'enceinte de protection de l'émetteur (e) et une lunette optique (B) dans le prolongement de l'enceinte de protection du récepteur (r), et
- une lunette de visée (C) disposée dans le prolongement de la lunette optique de l'émetteur (e) et une lunette de visée (C) disposée dans le prolongement de la lunette optique du récepteur (r), ladite fenêtre et/ou ladite lentille étant montée à une distance (u) prédéterminée par rapport à l'émetteur (e) et à une distance (u) prédéterminée par rapport au récepteur (r) d'au moins une cellule photoélectrique pour optimaliser le passage des ondes émises et réfléchies à travers ladite fenêtre et/ou ladite lentille.

25. Usage d'au moins un dispositif selon l'une quelconque des revendications 1 à 14 et 24, **caractérisé en ce qu'**il comporte des moyens pour détecter la position d'un véhicule par rapport aux lignes colorées définissant une bande de roulement, par rapport aux bordures ou aux accotements herbeux, sablonneux ou en terre.

26. Dispositif suivant l'une quelconque des revendications 1 à 13, **caractérisé en ce que** la lunette de visée (c) a une paroi intérieure anti-réfléchissante pour les ondes de la cellule photoélectrique.

## Patentansprüche

1. Sensorvorrichtung mit Fotozellen, die umfasst:
- wenigstens eine Schutzeinfassung (A), die wenigstens einen Sender (e) und wenigstens einen Empfänger (r) einer Fotozelle umschließt, und
- wenigstens einen optischen Aufsatz (B), der ausgestattet ist mit wenigstens einem Fenster (F) zum Schutz und zur Dichtheit und/oder wenigstens einer Linse zum Schutz und zur Dichtheit und/oder wenigstens einem optischen System (Le, Lr) zum Schutz und zur Dichtheit, welches wenigstens eine Fenster und/oder Linse und/oder optische System für die ausgesendeten und reflektierten Wellen der Fotozelle transparent ist,
**dadurch gekennzeichnet, dass** sie außerdem einen Richtaufsatz (C) umfasst, der in der Verlängerung des optischen Aufsatzes (B) angeordnet ist, wobei der Richtaufsatz (C) den Schutz besagten wenigstens einen Fensters (F) und/oder Linse und/oder optischen Systems zum Schutz und zur Dichtheit gegenüber Fremdprojektionen sicherstellt und einen Nutzarbeitsbereich, eine Beobachtungsrichtung und eine Arbeitsempfindlichkeit der Fotozelle definiert, und dadurch, dass besagtes wenigstens eine Fenster (F) und/oder Linse und/oder optisches System zum Schutz und zur Dichtheit in einer festgelegten Entfernung (u) in Bezug auf besagten wenigstens einen Sender (e) und auf besagten wenigstens einen Empfänger (r) der Fotozelle montiert ist, um den Durchgang der ausgesendeten und reflektierten Wellen durch besagtes wenigstens eine Fenster und/oder Linse und oder System zum Schutz und zur Dichtheit zu optimieren.

2. Sensorvorrichtung mit Fotozellen gemäß Anspruch 1, **dadurch gekennzeichnet, dass** besagtes Fenster (F) schräg angeordnet ist.

3. Sensorvorrichtung mit Fotozellen gemäß einem der vorhergehenden Ansprüche, **dadurch gekennzeichnet, dass** sie eine Trennwand (Ea) in dem optischen Aufsatz (B) umfasst, um die ausgesendeten Strahlen von den reflektierten Strahlen zu trennen, wenn der Empfänger (r) und der Sender (e) der Fotozelle nebeneinander liegen.

4. Sensorvorrichtung mit Fotozellen gemäß einem der vorhergehenden Ansprüche, **dadurch gekennzeichnet, dass** sie Mittel zur Trennung (Eb) in dem Fenster (F) umfasst, wobei die Mittel zur Trennung (Eb) in dem Fenster (F) in der Verlängerung der Mittel zur Trennung (Ea) in dem optischen Aufsatz (B) angeordnet sind.

5. Sensorvorrichtung mit Fotozollen gemäß einem der vorhergehenden Ansprüche, **dadurch gekennzeichnet, dass** sie eine Trennwand (Ec) in dem Richtaufsatz (C) umfasst.

6. Sensorvorrichtung mit Fotozellen gemäß einem der vorhergehenden Ansprüche, **dadurch gekennzeichnet, dass** die Neigung (c) der optischen Achse des Richtaufsatzes (C) in Bezug auf die zu beobachtende Oberfläche die Kontrolle der Strahlen in direkter Reflexion in Richtung des Empfängers (r) ermöglicht, wobei gleichzeitig eine Empfindlichkeit in diffuser Reflexion beibehalten wird.

7. Sensorvorrichtung mit Fotozellen gemäß einem der vorhergehenden Ansprüche, **dadurch gekennzeichnet, dass** sie ein optisches System (Le) für den Sender (e) und/oder ein optisches System (Lr) für den Empfänger (r) umfasst, wobei das optische System (Le) für den Sender (e) im Strahlungsfeld des Senders (e) für seine Einstellung auf die angezielte Nutzoberfläche angebracht ist, das optische System (Lr) im Feld der reflektierten Wollen, die vom Empfänger (r) erfasst werden, angeordnet ist, um die Position der Fotozelle in Bezug auf die zu beobachtende Nutzoberfläche zu berücksichtigen.

8. Sensorvorrichtung mit Fotozellen gemäß einem der vorhergehenden Ansprüche, **dadurch gekennzeichnet, dass** sie eine Blende (Te) für den Sender (e) und/oder eine Blende (Tr) für den Empfänger (r) umfasst.

9. Sensorvorrichtung mit Fotozellen gemäß einem der vorhergehenden Ansprüche, **dadurch gekennzeichnet, dass** sie ein Filter (Se) für den Sender (e) und/oder ein Filter (Sr) für den Empfänger (r) umfasst.

10. Sensorvorrichtung mit Fotozellen gemäß einem der vorhergehenden Ansprüche, **dadurch gekennzeichnet, dass** die Position des Fensters (F) in Bezug auf die optische Achse des Senders (e) und des Empfängers (r) der Fotozelle durch einen Winkel (a) und einen Trennabstand (u) definiert ist, die von deren Merkmalen abhängen.

11. Sensorvorrichtung mit Fotozellen gemäß einem der vorhergehenden Ansprüche, **dadurch gekennzeichnet, dass** das Fenster (F) auf einer Seite oder auf beiden Seiten einer Filter-, Antibeschlags-, Antihaft-, Antireflexbehandlung und/oder in der Dicke selbst des Fensters (F) einer Filterbehandlung unterzogen wurde.

12. Sensorvorrichtung mit Fotozellen gemäß einem der vorhergehenden Ansprüche, **dadurch gekennzeichnet, dass** sie-zwei parallele Fenster (F1, F2) umfasst, um einen doppelwandigen Schutz zu erzielen.

13. Sensorvorrichtung mit Fotozellen gemäß Anspruch 12, **dadurch gekennzeichnet, dass** die beiden Fenster (F1, F2) durch die Trennwand (Eb) getrennt sind, zwischen denen eine Kühlflüssigkeit oder ein Kühlgas zirkuliert.

14. Sensorvorrichtung mit Fotozellen gemäß einem der vorhergehenden Ansprüche, **dadurch gekennzeichnet, dass** der Richtaufsatz (C) eine Innenwand besitzt, die für die Strahlung der Wellen der Fotozelle reflektierend ist, mit dem Ziel, deren Leistungen in diffuser Reflexion zu erhöhen.

15. Verwendung wenigstens einer Vorrichtung gemäß einem der vorhergehenden Ansprüche, die auf Eisenbahnmaterial montiert ist, um dem Führer oder der Lokomotive während der Bewegung des Zugs von kodierten Schildern aus, die gegenüber von dem rollenden Material angebracht sind, Informationen zu übermitteln.

16. Verwendung wenigstens einer Vorrichtung gemäß einem der vorhergehenden Ansprüche, die das gleichzeitige Lesen von zwei oder mehreren übereinander liegenden kodierten Schildern in Kombination mit zwei oder mehreren Sensorvorrichtungen mit Fotozellen, die auf Material, das sich bewegen kann, angebracht sind, ermöglicht, um die Nutzinformationen während dessen Bewegung aufzunehmen und ihm zu übermitteln.

17. Verwendung wenigstens einer Vorrichtung gemäß einem der Ansprüche 1 bis 14, wobei die Sensorvorrichtungen mit Fotozellen auf Transportmaterial in Fabriken, Häfen, Baustellen angebracht sind, um einen Weg zu identifizieren und Orte zum Anhalten anzuzeigen und kodierte Meldungen zu übermitteln.

18. Verwendung wenigstens einer Vorrichtung gemäß einem der Ansprüche 1 bis 14, die auf einem Stock für Fußgänger montiert ist, um einen Weg zu bestimmen oder Informationen unverschlüsselt oder in fühlbaren Zeichen (Vibrationen, Braille) während der gesamten gegangenen Strecke anzugeben.

19. Verwendung wenigstens einer Vorrichtung gemäß einem der Ansprüche 1 bis 14, die auf einem Hebegerät montiert ist, um die verschiedenen Hubniveaus mit eventueller Meldung und die genaue Position zum Anhalten im Fall eines beweglichen Geräts anzuzeigen.

20. Verwendung wenigstens einer Vorrichtung gemäß einem der Ansprüche 1 bis 14, die gegenüber von einer Rotationsachse, einem Rad angebracht ist, um die Rotationsgeschwindigkeit durch die Anordnung auf dieser Achse oder auf diesem Rad eines oder mehrerer reflektierender Abschnitte, die mit einem oder mehreren absorbierenden Abschnitten abwechseln, zu messen.

21. Verwendung gemäß einem der Ansprüche 15 und 20, bei der die Vorrichtung gegenüber von dem Eisenbahnmaterial montiert ist, um während der Bewegung des Zugs von kodierten Schildern aus, die auf dem rollenden Material angebracht sind, Informationen an den Boden zu übermitteln.

22. Verwendung gemäß einem der Ansprüche 16 und 20, die das gleichzeitige Lesen von zwei oder mehreren übereinander liegenden kodierten Schildern in Kombination mit zwei oder mehreren Sensorvorrichtungen mit Fotozellen ermöglicht, wobei diese in Bezug auf die kodierten Schilder, die auf rollendem Material angeordnet sind, ortsfest sind.

23. Verwendung gemäß einem der Ansprüche 17 und 20, wobei die Schilder auf Transportmaterial in den Fabriken, Häfen, Baustellen angebracht sind und die Sensorvorrichtungen mit Fotozellen auf ortsfesten Posten angeordnet sind.

24. Sensorvorrichtung mit Fotozellen, **dadurch gekennzeichnet, dass** sie umfasst wenigstens eine Schutzeinfassung (A), die wenigstens einen Sender (e) umschließt, und wenigstens eine Schutzeinfassung (A), die wenigstens einen Empfänger (r) von wenigstens einer Fotozelle umschließt,
- wenigstens einen optischen Aufsatz (B), der mit wenigstens einem Fenster (F, F1, F2) und/oder wenigstens einer Linse zum Schutz und zur Dichtheit und/oder wenigstens einem optischen System (Le) und/oder einem optischen System (Lr) ausgestattet ist, wobei ein optischer Aufsatz (B) in der Verlängerung der Schutzeinfassung des Senders (e) und ein optischer Aufsatz (B) in der Verlängerung der Schutzeinfassung des Empfängers (r) angeordnet ist, und
- einen Richtaufsatz (C), der in der Verlängerung des optischen Aufsatzes des Senders (e) angeordnet ist, und einen Richtaufsatz (C), der in der Verlängerung des optischen Aufsatzes des Empfängers (r) angeordnet ist, wobei besagtes Fenster und/oder besagte Linse in einer festgelegten Entfernung (u) in Bezug auf den Sender (e) und in einer festgelegten Entfernung (u) in Bezug auf den Empfänger (r) von wenigstens einer Fotozelle montiert ist, um den Durchgang der ausgesendeten und reflektierten Wellen durch besagtes Fenster und/oder besagte Linse zu optimieren.

25. Verwendung wenigstens einer Vorrichtung gemäß einem der Ansprüche 1 bis 14 und 24, **dadurch gekennzeichnet, dass** sie Mittel zur Erfassung der Position eines Fahrzeugs in Bezug auf die farbigen Linien, die eine Fahrspur in Bezug auf die Ränder oder die Seitenstreifen aus Gras, Sand oder Erde definieren, umfasst.

26. Vorrichtung gemäß einem der Ansprüche 1 bis 13, **dadurch gekennzeichnet, dass** der Richtaufsatz (c) eine Innenwand hat, die für die Wellen der Fotozelle nicht reflektierend ist.

## Claims

1. Device for detection by photoelectric cells, comprising:
- at least one protective enclosure (A) surrounding at least one emitter (e) and at least one receiver (r) of a photoelectric cell, and
- at least one optical bezel (B) provided with at least one protective and sealing window (F), and/or at least one protective and sealing lens and/or at least one protective and sealing optical system (Le, Lr), the said at least one window and/or lens and/or optical system being transparent to the waves emitted and reflected from the photoelectric cell,
**characterised in that** it also comprises an aiming bezel (C) disposed in line with the optical bezel (B), the aiming bezel (C) providing the protection of the said at least one protective and sealing window (F) and/or lens and/or optical system against external splashing and defining a useful working area, an aiming direction and a working sensitivity for the photoelectric cell, and **in that** the said at least one protective and sealing window (F) and/or lens and/or optical system is mounted at a predetermined distance (u) with respect to the said at least one emitter (e) and the said at least one receiver (r) of the photoelectric cell in order to optimise the passage of the waves emitted and reflected through the said at least one protective and sealing window and/or lens and/or system.

2. Device for detection by photoelectric cells according to Claim 1, **characterised in that** the said window (F) is disposed obliquely.

3. Device for detection by photoelectric cells according to any one of the preceding claims, **characterised in that** it comprises a partition (Ea) in the optical bezel (B) for separating the emitted rays from the reflected rays when the receiver (r) and the emitter (e) of the photoelectric cell are juxtaposed.

4. Device for detection by photoelectric cells according to one of the preceding claims, **characterised in that** it comprises separation means (Eb) in the window (F), the separation means (Eb) in the window (F) being disposed in line with the separation means (Ea) in the optical bezel (B).

5. Device for detection by photoelectric cells according to any one of the preceding claims, **characterised in that** it comprises a partition (Ec) in the aiming bezel (C).

6. Device for detection by photoelectric cells according to any one of the preceding claims, **characterised in that** the inclination (c) of the optical axis of the aiming bezel (C) with respect to the surface to be observed allows control of the rays with direct reflection in the direction of the receiver (r) whilst keeping sensitivity to the diffuse reflection.

7. Device for detection by photoelectric cells according to any one of the preceding claims, **characterised in that** it comprises an optical system (Le) for the emitter (e) and/or an optical system (Lr) for the receiver (r), the optical system (Le) for the emitter (e) being placed in the field of radiation of the emitter (e) for its adjustment on the useful surface aimed at, the optical system (Lr) being disposed in the field of the reflected rays perceived by the receiver (r) in order to take account of the position of the photoelectric cell with respect to the useful surface to be observed.

8. Device for detection by photoelectric cells according to any one of the preceding claims, **characterised in that** it comprises a diaphragm (Te) for the emitter (e) and/or a diaphragm (Tr) for the receiver (r).

9. Device for detection by photoelectric cells according to any one of the preceding claims, **characterised in that** it comprises a filter (Se) for the emitter (e) and/or a filter (Sr) for the receiver (r).

10. Device for detection by photoelectric cells according to any one of the preceding claims, **characterised in that** the position of the window (F) with respect to the optical axis of the emitter (e) and of the receiver (r) of the photoelectric cell is defined by an angle (a) and a separation distance (u) which is a function of the characteristics thereof.

11. Device for detection by photoelectric cells according to any one of the preceding claims, **characterised in that** the window (F) has undergone a filtering, anti-mist, anti-adhesion and anti-reflective treatment on one face or on both faces, and/or a filtering treatment in the actual thickness of the window (F).

12. Device for detection by photoelectric cells according to any one of the preceding claims, **characterised in that** it comprises two parallel windows (F1, F2) for producing double-wall protection.

13. Device for detection by photoelectric cells according to Claim 12, **characterised in that** the two windows (F1, F2) are separated by the partition (Eb) and a cooling liquid or gas circulates between them.

14. Device for detection by photoelectric cells according to any one of the preceding claims, **characterised in that** the aiming bezel (C) has an internal wall with a reflective nature for the radiation of the waves from the photoelectric cell for the purpose of increasing the performance thereof with regard to diffuse reflection.

15. Use of at least one device according to any one of the preceding claims, mounted on railway equipment with a view to transmitting to the driver or to the machine information during the movement of the train from coded panels placed opposite the travelling equipment.

16. Use of at least one device according to any one of the preceding claims allowing the simultaneous reading of two or more coded panels staged in association with two or more devices for detection by photoelectric cells being placed on equipment able to move in order to record and transmit the useful information thereto during the movement thereof.

17. Use of at least one device according to any one of Claims 1 to 14, the devices for detection by photoelectric cells being placed on transport equipment in factories, ports or building sites in order to identify an itinerary and indicate stoppage points and transmit coded messages.

18. Use of at least one device according to any one of Claims 1 to 14, mounted on a walking stick for pedestrians with a view to determining a path or giving information in clear or in sensitive signs (vibrations, braille) all along the path taken.

19. Use of at least one device according to any one of Claims 1 to 14, mounted on a lifting machine in order to indicate the various elevation levels with any message and the position of precise stoppage in the case of a mobile machine.

20. Use of at least one device according to any one of Claims 1 to 14, placed opposite the rotation shaft of a wheel in order to measure the speed of rotation by virtue of the placement on this shaft or on this wheel of one or more reflective segments alternating with one or more absorbent segments.

21. Use according to any one of Claims 15 and 20, in which the device is mounted opposite the railway equipment with a view to transmitting information to the ground during the movement of the train from coded panels placed on the travelling equipment.

22. Use according to either one of Claims 16 and 20, allowing the simultaneous reading of two or more staged coded panels in association with two or more devices for protection by photoelectric cells, the latter being fixed with respect to the coded panels disposed on the travelling equipment.

23. Use according to either one of Claims 17 and 20, the panels being placed on transport equipment in factories, ports and building sites, the devices for detection by photoelectric cells being disposed on fixed stations.

24. Device for detection by photoelectric cells, **characterised in that** it comprises at least one protective enclosure (A) surrounding at least one emitter (e) and at least one protective enclosure (A) surrounding at least one receiver (r) of at least one photoelectric cell,
- at least one optical bezel (B) provided with at least one window (F, F1, F2) and/or at least one protective and sealing lens and/or at least one optical system (Le) and/or an optical system (Lr), an optical bezel (B) being disposed in line with the protective enclosure of the emitter (e) and an optical bezel (B) in line with the protective enclosure of the receiver (r) , and
- an aiming bezel (C) disposed in line with the optical bezel of the emitter (e) and an aiming bezel (C) disposed in line with the optical bezel of the receiver (r), the said window and/or the said lens being mounted at a predetermined distance (u) with respect to the emitter (e) and a predetermined distance (u) with respect to the receiver (r) of at least one photoelectric cell in order to optimise the passage of the waves emitted and reflected through the said window and/or the said lens.

25. Use of at least one device according to any one of Claims 1 to 14 and 24, **characterised in that** it comprises means for detecting the position of a vehicle with respect to the coloured lines defining a running track, with respect to the grass, sand or earth borders or verges.

26. Device according to any one of Claims 1 to 13, **characterised in that** the aiming bezel (c) has a non-reflective internal wall for the waves from the photoelectric cell.
